(19) Europäisches Patentamt
European Patent Office
Office européen des brevets

(11) EP 1 300 045 B1

(12) **EUROPEAN PATENT SPECIFICATION**

(45) Date of publication and mention
of the grant of the patent:
**10.08.2005 Bulletin 2005/32**

(21) Application number: **01969314.2**

(22) Date of filing: **25.06.2001**

(51) Int Cl.⁷: $\text{H04Q } 7/38$

(86) International application number:
**PCT/EP2001/007176**

(87) International publication number:
**WO 2002/001892 (03.01.2002 Gazette 2002/01)**

(54) **RADIO ACCESS TRAFFIC MANAGEMENT**

ZUGANGSSTEUERUNG FÜR FUNKVERKEHR

GESTION DE TRAFIC D'ACCES RADIO

(84) Designated Contracting States:
**AT BE CH CY DE DK ES FI FR GB GR IE IT LI LU
MC NL PT SE TR**

(30) Priority: **30.06.2000 GB 0015977**

(43) Date of publication of application:
**09.04.2003 Bulletin 2003/15**

(73) Proprietor: **MOTOROLA, INC.
Schaumburg, IL 60196 (US)**

(72) Inventors:
• **JONES, Phil
Wootton Bassett, Wiltshire SN4 8LJ (GB)**

• **OWEN, Ray
Bath, Somerset BA1 3OY (GB)**
• **DA SILVA, Joao
1495 Alges (PT)**

(74) Representative: **Jepsen, Rene Pihl et al
European Patent Attorney
Eltima Consulting
Shaftesbury Centre
Percy Street
Rodbourne
Swindon SN2 2AZ (GB)**

(56) References cited:
**WO-A-00/35226        US-A- 6 038 448
US-A- 6 078 817**

## Description

Field of the Invention

This invention relates to a communication network and a method and apparatus for traffic management.

Background of the Invention

In a cellular communication system each of the user terminals (typically mobile stations) communicates with typically a fixed base station (BS). Communication from the user terminal to the base station is known as uplink and communication from the base station to the user terminal is known as downlink. The total coverage area of the system is divided into a number of separate cells, each predominantly covered by a single base station.

As a user terminal moves from the coverage area of one cell to the coverage area of another cell, the communication link will change from being between the user terminal and the base station of the first cell, to being between the user terminal and the base station of the second cell. This is known as a handover.

All base stations are interconnected by a fixed network. This fixed network comprises communication lines, switches, interfaces to other communication networks and various controllers required for operating the network. A call from a user terminal is routed through the fixed network to the destination specific for this call. If the call is between two user terminals of the same communication system the call will be routed through the fixed network to the base station of the cell in which the other user terminal currently is. A connection is thus established between the two serving cells through the fixed network. Alternatively, if the call is between a user terminal and a telephone connected to the Public Switched Telephone Network (PSTN) the call is routed from the serving base station to the interface between the cellular mobile communication system and the PSTN. It is then routed from the interface to the telephone by the PSTN.

A cellular mobile communication system is allocated a frequency spectrum for the radio communication between the user terminals and the base stations. This spectrum must be shared between all user terminals simultaneously using the system.

One method of sharing this spectrum is by a technique known as Code Division Multiple Access (CDMA). In a Direct Sequence CDMA (DS-CDMA) communication system, the signals are, prior to being transmitted, multiplied by a high rate code whereby the signal is spread over a larger frequency spectrum. A narrowband signal is thus spread and transmitted as a wideband signal. At the receiver the original narrowband signal is regenerated by multiplication of the received signal with the same code. A signal spread by use of a different code will at the receiver not be de-spread but will remain a wide band signal. In the receiver the majority of interference caused by interfering signals received in the same frequency spectrum as the wanted signal can thus be removed by filtering. Consequently a plurality of user terminals can be accommodated in the same wideband spectrum by allocating different codes for different user terminals. Codes are chosen to minimise the interference caused between user terminals typically by choosing orthogonal codes when possible. In the frequency division duplex (FDD) arrangement, one carrier frequency is allocated for communications on the downlink and another carrier frequency is allocated for communications on the uplink.

A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 standardised in North America and the Universal Mobile Telecommunication System (UMTS) currently under standardisation in Europe.

Typically, CDMA communication systems use a handover technique known as soft hand over. In a soft handover, a user terminal is simultaneously served by more than one base station. In the uplink, the signal received at each base station is communicated to a controller where the signals are combined and the received data is recovered. In the downlink the data to be transmitted to the user terminal is communicated from the controller to both base stations and both base stations simultaneously transmit the data to the user terminal. The user terminal combines the two signals and demodulates the signal.

The quality of the radio communication between the user terminal and the base station is determined by the signal to noise level of the signals where the noise includes both thermal noise and interference noise. Other base stations and user terminals generate interference, which increases the noise level and thus reduces the quality. In order to attain an acceptable quality level the interference must thus be kept sufficiently low. A major technique for interference reduction in CDMA system is use of power control whereby the transmitted power of each user terminal and base station is maintained at the minimum level required for the signal to be received at an acceptable quality. Uplink power control can be implemented by the base station measuring the received signal quality and transmitting power up information to the user terminal when the signal quality is below an acceptable level, and power down information when the signal quality is above this level. Similarly, downlink power control can be implemented by the user terminal transmitting power up or power down information depending on the signal quality of the signal received at the user terminal.

In CDMA systems, the downlink transmission consists of a permanent pilot tone and a number of radio channels. The pilot tone is used by each user terminal to estimate the path loss so as to set power control initially, and to acquire synchronisation to the codeword generator. The other channels are set aside for broadcasting control information and for the transmission of traffic, ie speech or data.

In a communication system such as cellular communication systems, efficient resource control is essential for achieving the highest performance of the communication system. The communication system thus requires means for controlling the transmission of data services, allocating resources to different users, scheduling the transmission of data, providing error checks, determining serving base station etc.

In UMTS, the concept of an active set held by each user terminal plays a key role in both up and downlink traffic routing. The active set lists every base station with which a user terminal may establish traffic channels. The user terminal periodically updates this list based upon estimates of the received power of the pilot tone received from neighbouring base stations. The transmitted power of this pilot tone is also broadcasted by each base station. Based upon estimates of the received power of the pilot tone and its known transmitted power, the user terminal determines the BS to which it has lower propagation losses ie its primary serving BS. This one then becomes the first one listed in the active set. The active set also includes other base stations to which the mobile experiences propagation losses within a certain handover window. Thus, the active set not only determines cell ownership, but also the BS's with which the user terminal is more likely to be in soft handover with.

The downlink FDD modulation scheme distributes the users along a binary tree of channelization codes. Users requiring high bit rate services (lower spreading factor) must be given a code in one of the lower order nodes of the tree whereas low bit rate users occupy the higher order nodes. A code can be allocated to a downlink channel if and only if no other code on the path from the specific code to the root of the tree or in the sub-tree below the specific code is used by another downlink channel in the same base station. Only under those circumstances, different channels in the same code tree will have a certain degree of orthogonality between them, which will be a function of the multipath profile of the channel. Therefore, the amount of resources consumed by the admission of a new downlink channel turns out to be a function of that channel bit rate i.e. spreading factor.

Traffic spatial distributions change according to the time of day. In fact the occurrence of special events may result in an abnormal traffic density in restricted areas. Especially in the downlink, where all users in the same BS share available resources such as power amplifier power and channelization codes, the presence of overloaded cells will have a direct impact in the efficient use of these resources. This raises the need for traffic management in order to route traffic from overloaded cells to other covering lower density traffic areas. The definition of the active set however, only takes into account propagation conditions between a user terminal and base stations in the network. This means that no traffic management policies are implemented by the active set definition algorithm.

The following examples show the impact this may have in network performance.

EXAMPLE 1

Assume a situation where a user terminal is located near the boundary of a cell. Its active set includes:

- BS 1 - the primary serving base station that covers a high traffic density area
- BS 2 - this BS covers a low traffic density area. The estimated propagation conditions between the user terminal and this BS are only slightly worse than that to BS 1.

Let us further assume that BS 1 is about to run out of resources.

BS 2 could easily support the considered user. However, because the user terminal has BS 1 as the first of its active set, it will be connected to this already overloaded BS 1.

EXAMPLE 2

Assume a situation similar to the one presented in example 1 but where scarce resources in BS 1 are low spreading factor channelization codes. This means that BS 1 is still capable of accommodating high spreading factor users in its code tree, but has run out of low spreading factor codes which in this example is precisely the type of code the considered user terminal requires.

BS 1 may deal with this situation in three different known ways:

- by blocking the new coming call,
- by dropping some high spreading factor calls in order to release a node in the tree to accommodate the new coming call or
- by using an additional channelization code tree. The third option will result in a decrease of the average orthogonality degree between downlink channels in BS 1, since channels in different trees are non-orthogonal to each other. This would lead to degradation in the quality of the service delivered to every user, and could eventually result in several calls being dropped.

The conventional way CDMA systems (such as IS95) deal with some of these problems is by a mechanism of "active cell breathing". A base station serving an overloaded cell simply reduces the transmitted power of its pilot tone. This way, the overloaded BS will move down in some user terminals active sets, and thus discourage these terminals from routing their traffic to it. This method, however, has the major disadvantage of having a direct impact on the covered area. In fact if a user terminal only has one base station in its active set and this BS decreases its pilot power, the mobile may be left with no BS in its active set, i.e. in an uncovered area, since the reduction of pilot power will effectively shrink cell boundaries. Furthermore this technique does not selectively route traffic according to user profiles and available resources. This way it would be incapable of tackling the problem presented in example 2 above.

US6078817 discloses a method and a system for dynamically increasing the capacity of a CDMA radio telecommunications network. Upon receipt of an access request when the network is heavily loaded, one of the duplicate channels assigned to an existing mobile is released and is allocated to the entering mobile station.

Summary of the Invention

The present invention comprises, in a first aspect, apparatus for facilitating the management of communications traffic between a user terminal and a plurality of base stations (BS) in a cellular communications network in accordance with claim 1.

In accordance with a feature of the present invention the apparatus comprises a base station in accordance with claim 2.

Optionally, the base station may be further provided with means for classifying the user terminal according to some pre-determined criterion, for example, whether the user terminal was a high or low bit rate terminal, and to set the level of the degradation value according to such classification.

In a second aspect, the present invention comprises a method of facilitating the management of communications between a user terminal and a plurality of base stations in a cellular communications network in accordance with claim 7.

The communications signal transmitted from a BS to the user terminal is a pilot tone and the characteristic estimated may be its signal strength. Alternatively, the characteristic estimated may be pilot Ec/Io (the ratio of chips energy to interference power), or pilot signal to noise ratio. Pilot tones from several neighbouring base stations may be monitored by a single user terminal. Each BS also transmits a pilot tone degradation value whose value can vary between base stations and which may be set individually by each BS depending on factors such as cell loading, for example.

For each BS, the user terminal computes a virtual pilot tone strength estimate by subtracting the relevant degradation value from the measured, received value. The user terminal then creates an active set by ranking neighbouring base stations according to their virtual pilot tone strength estimates. The BS with the highest such estimate will be first on the list.

The invention further proposes the use of a broadcast channel to issue artificial downlink pilot power degradation values. An active set definition algorithm now takes into account the virtual pilot power estimate. The user terminal obtains this virtual estimate by subtracting the degradation value from the real power estimate.

This is shown in the following equation:

$$P_v = P - D \qquad (1)$$

where

$P_v$ is the virtual pilot power estimate [dBm]
P is the real pilot power estimate [dBm]
D is the degradation value [dB]

This way overloaded cells (issuing degradation values) are moved down in some user terminals' active sets. Unlike the method used in IS95, this technique has the major advantage of having no impact in cell coverage, since the actual transmitted power of the pilot channel is not reduced. Further, if a user terminal has only one cell in its active set it may simply discard the degradation value. This method has the additional advantage of primarily affecting users at the cell boundaries that are more likely to have more than one BS in their active sets

Furthermore, if these commands adopt a slightly more elaborated structure, they may be used to issue different degradation values to users with different profiles.

This would mean broadcasting $k$ different degradation values $(D_1, D_2, ..., D_k)$, for mobiles fitting each one of the $k$ considered profile categories.

According to this, the problem in example 2 could be solved by two different approaches.

- By having BS 1 issuing a degradation value $D_1$ for high bit rate users.
- By having BS 1 issuing a degradation value $D_2$ (having a larger value than $D_1$,) to low bit rate users, as a way to encourage them to migrate to BS2 and thus release a node in the code tree where the high bit rate user could be accommodated.

This invention has the following benefits:

1. It enables the network to implement traffic management measures in a simple way.
2. Unlike the IS95 cell breathing technique, this method has no impact on cell coverage.
3. The invention has a high degree of flexibility allowing the network to issue profile dependent commands, and separate commands for up and downlink.

4. All this is achieved with minimal signalling overhead.

Some embodiments of the invention will now be described, by way of example only with reference to the drawings of which;

Fig. 1 is a schematic diagram of a cellular communications network in accordance with the invention;

Fig. 2 is a schematic block diagram of constituent parts of a mobile user terminal in accordance with the invention and

Fig. 3 is a schematic block diagram of the constituent parts of a base station in accordance with the invention.

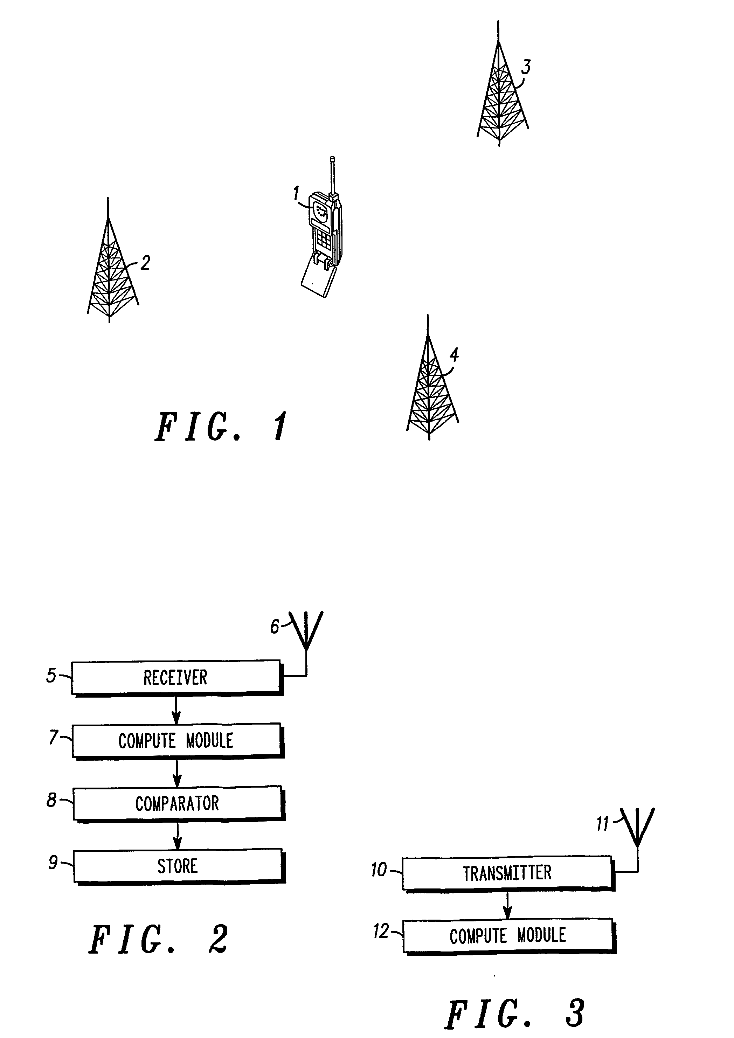

In Fig. 1 a cellular communications network includes a mobile user terminal 1 and a plurality of base stations 2, 3, 4. The terminal 1 is within range of all three base stations and able to receive signals therefrom. As will be explained below, the user terminal 1 is equipped with the means to form an active set of base stations where each of the three base stations are placed in a list and ordered according to a virtual power estimate associated with each base station.

With reference to Fig. 2, the user terminal 1 includes a receiver 5 for receiving, via an antenna 6, pilot tones emitted by each base station 2, 3, 4 and a degradation value sent by each of the base stations 2, 3, 4. An output of the receiver 5 is fed to a computation module 7 which computes an estimate of the strengths of the received pilot tones from each base station. A comparator 8 is connected to the receiver 5 and the computation module 7 for comparing the estimated pilot tones strengths with the relevant degradation value for each base station. The output of the comparator 8 is fed to a store 9 which holds the active set.

With reference now to Fig. 3, each base station includes a transmitter 10 for transmitting pilot tone and degradation value to the mobile user terminal 1 via an antenna 11. A computation module 12 is connected to the transmitter 10 for setting the degradation value and classifying mobile user terminals within its range.

It will be understood that the mobile user terminal and base station of Figs. 2 and 3 also include the conventional circuitry required for effecting mobile communications, but such circuitry is omitted for the sake of clarity.

In operation, a communications link is set up between each base station 2, 3, 4 and the mobile user terminal 1 in a known manner. Each base station transmits a pilot tone. Each base station's computation module 12 determines a classification for the user terminal, for example, whether it is a high bit rate user, or low bit rate user. It also computes a cell loading factor for the cell it serves, and depending on this factor and the classification of the user terminal, sets a pilot tone degradation value. The degradation value is then transmitted to the user terminal 1.

At the user terminal 1, the pilot tones are received and a signal strength estimate for each one is computed in accordance with known techniques by the computation module 7. In the comparator 8, the degradation values received from each base station are subtracted from their corresponding signal strength estimates to obtain virtual signal strength estimates for each base station. These virtual strength estimates are fed to the store 9 where they are arranged in the active set list in order of decreasing virtual signal strength value.

Thus a base station currently serving a highly loaded cell, would set its degradation value to a comparatively high level so that the virtual strength level would be comparatively low, thereby moving that base station down in the active set. Hence, the user terminal would not request access to this particular base station, but choose another one higher up on the list.

**Claims**

1. Apparatus for facilitating the management of communications traffic between a user terminal and a plurality of base stations (2,3,4) in a cellular communications network including a user terminal comprising:

means for receiving (5,6) a pilot tone from at least one base station (2) and for computing (7) an estimate of a pilot tone characteristic of the received pilot tone,

and **characterised by**
means for receiving (5,6) a pilot tone characteristic degradation value associated with said at least one base station (2),
means for determining (8) a virtual estimate of the pilot tone characteristic by a comparison of the degradation value and the pilot tone characteristic,
means for ranking (9) said base station (2) relative to other base stations depending on upon the value of the computed virtual estimate.

2. Apparatus according to claim 1 including, in the at least one base station (2),
means for transmitting a communication signal to the user terminal (1);
and **characterized by** the base station (2) further comprising:
means for transmitting (10) a pilot tone characteristic degradation value for a measurable pilot tone characteristic and associated with the base station (2), to the user terminal (1).

3. Apparatus according to claim 2 in which the base station (2) is further provided with means for classifying (12) the user terminal (1) according to a predetermined criterion, and for setting the level of the degradation value according to such classification.

4. Apparatus according to claim 2 or claim 3 in which the base station (2) is provided with means for setting (12) the degradation value depending on the loading of the cell that it serves.

5. Apparatus according to claim 1 in which the computed characteristic is signal strength.

6. Apparatus according to claim 1 in which the computed characteristic is a signal to noise ratio.

7. A method for facilitating the management of communications traffic between a user terminal and a plurality of base stations (2,3,4) in a cellular communications network including a user terminal performing the steps of:

receiving a pilot tone from at least one base station (2) and for computing (7) an estimate of a pilot tone characteristic of the received pilot tone,

and **characterised by**

receiving a pilot tone characteristic degradation value associated with said at least one base station (2),

determining (8) a virtual estimate of the pilot tone characteristic by a comparison of the degradation value and the pilot tone characteristic,

ranking (9) said base station (2) relative to other base stations depending on upon the value of the computed virtual estimate.

8. A method according to claim 7 including the at least one base station (2) performing the step of:

transmitting a communication signal to the user terminal (1);

and **characterized by** the base station (2) further performing the step of:

transmitting (10) a pilot tone characteristic degradation value for a measurable pilot tone characteristic and associated with the base station (2), to the user terminal (1).

**Patentansprüche**

1. Vorrichtung zur Erleichterung der Verwaltung von Kommunikationsverkehr zwischen einem Benutzer-Terminal und einer Mehrzahl von Basisstationen (2, 3, 4) in einem zellularen Kommunikationsnetzwerk mit einem Benutzer-Terminal, umfassend:

Mittel zum Empfangen (5, 6) eines Pilottons von wenigstens einer Basisstation (2) und zum Berechnen (7) eines Schätzwertes einer Pilottoneigenschaft des empfangenen Pilottons

und **gekennzeichnet durch**

Mittel zum Empfangen (5, 6) eines der wenigstens einen Basisstation (2) zugeordneten Pilottoneigenschaft-Verschlechterungswertes,

Mittel zum Bestimmen (8) eines virtuellen Schätzwertes der Pilottoneigenschaft **durch** einen Vergleich des Verschlechterungswertes und der Pilottoneigenschaft,

Mittel zum Einstufen (9) der Basisstation (2) im Verhältnis zu anderen Basisstationen, abhängig von dem Wert des berechneten virtuellen Schätzwertes.

2. Vorrichtung gemäß Anspruch 1, umfassend in der wenigstens einen Basisstation (2):

Mittel zum Senden eines Kommunikationssignals an das Benutzer-Terminal (1); und **dadurch gekennzeichnet, dass** die Basisstation (2) weiter umfasst:

Mittel zum Senden (10) eines der Basisstation (2) zugeordneten Pilottoneigenschaft-Verschlechterungswertes für eine messbare Pilottoneigenschaft an das Benutzer-Terminal (1).

3. Vorrichtung gemäß Anspruch 2, wobei die Basisstation (2) weiter mit Mitteln zum Klassifizieren (12) des Benutzer-Terminals (1) gemäß einem vorbestimmten Kriterium und zum Festsetzen der Stufe des Verschlechterungswertes gemäß solch einer Klassifizierung ausgestattet ist.

4. Vorrichtung gemäß Anspruch 2 oder Anspruch 3, wobei die Basisstation (2) mit Mitteln zum Festsetzen (12) des Verschlechterungswertes in Abhängigkeit von der Belastung der Zelle, die sie bedient, ausgestattet ist.

5. Vorrichtung gemäß Anspruch 1, wobei die berechnete Eigenschaft eine Signalstärke ist.

6. Vorrichtung gemäß Anspruch 1, wobei die berechnete Eigenschaft ein Signal/Rausch-Verhältnis ist.

7. Verfahren zum Erleichtern der Verwaltung von Kommunikationsverkehr zwischen einem Benutzer-Terminal und einer Mehrzahl von Basisstationen (2, 3, 4) in einem zellularen Kommunikationsnetzwerk mit einem Benutzer-Terminal, welches die folgenden Schritte ausführt:

Empfangen eines Pilottons von wenigstens einer Basisstation (2) und zum Berechnen (7) eines Schätzwertes einer Pilottoneigenschaft des empfangenen Pilottons

und **gekennzeichnet durch**

Empfangen eines der wenigstens einen Basisstation (2) zugeordneten Pilottoneigenschaft-Verschlechterungswertes,

Bestimmen (8) eines virtuellen Schätzwertes der Pilottoneigenschaft **durch** einen Vergleich des Verschlechterungswertes und der Pilottoneigenschaft,

Einordnen (9) der Basisstation (2) im Verhältnis zu anderen Basisstationen, abhängig von dem Wert des berechneten virtuellen Schätzwertes.

8. Verfahren gemäß Anspruch 7, umfassend wenigstens eine Basisstation (2) die den folgenden Schritt durchführt:

Senden eines Kommunikationssignals an das Benutzer-Terminal (1);

**dadurch gekennzeichnet, dass** die Basisstation (2) weiter den folgenden Schritt durchführt:

Senden (10) eines der Basisstation (2) zugeordneten Pilottoneigenschaft-Verschlechterungswertes für eine messbare Pilottoneigenschaft an das Benutzer-Terminal (1).

**Revendications**

1. Dispositif destiné à faciliter la gestion du trafic de communications entre un terminal d'utilisateur et une pluralité de stations de base (2, 3, 4) dans un réseau de communications cellulaire comprenant un terminal d'utilisateur comprenant :

des moyens destinés à recevoir (5, 6) une fréquence pilote en provenance d'au moins une station de base (2) et à calculer (7) une estimation d'une caractéristique de fréquence pilote de la fréquence pilote reçue,

et **caractérisé par**
des moyens destinés à recevoir (5, 6) une valeur de dégradation de caractéristique de fréquence pilote associée à ladite au moins une station de base (2),
des moyens destinés à déterminer (8) une estimation virtuelle de la caractéristique de fréquence pilote par une comparaison de la valeur de dégradation et de la caractéristique de fréquence pilote,

des moyens destinés à classer (9) ladite station de base (2) par rapport à d'autres stations de base selon la valeur de l'estimation virtuelle calculée.

2. Dispositif selon la revendication 1 comprenant, dans la au moins une station de base (2),
des moyens destinés à transmettre un signal de communication vers le terminal d'utilisateur (1) ;
et **caractérisé en ce que** la station de base (2) comprend en outre :

des moyens destinés à transmettre (10) une valeur de dégradation de caractéristique de fréquence pilote pour une caractéristique de fréquence pilote mesurable et associée avec la station de base (2) vers le terminal d'utilisateur (1).

3. Dispositif selon la revendication 2 dans lequel la station de base (2) est en outre pourvue de moyens destinés à classer (12) le terminal d'utilisateur (1) selon un critère prédéterminé et à définir le niveau de la valeur de dégradation selon une telle classification.

4. Dispositif selon la revendication 2 ou la revendication 3 dans lequel la station de base (2) est pourvue de moyens pour définir (12) la valeur de dégradation selon le chargement de la cellule qu'il sert.

5. Dispositif selon la revendication 1 dans lequel la caractéristique calculée est une force de signal.

6. Dispositif selon la revendication 1 dans lequel la caractéristique calculée est un rapport signal/bruit.

7. Procédé destiné à faciliter la gestion du trafic de communications entre un terminal d'utilisateur et une pluralité de stations de base (2, 3, 4) dans un réseau de communications cellulaire comprenant un terminal d'utilisateur réalisant les étapes consistant à :

recevoir une fréquence pilote en provenance d'au moins une station de base (2) et pour calculer (7) une estimation d'une caractéristique de fréquence pilote de la caractéristique pilote reçue,

et **caractérisée en ce qu'**il comprend les étapes consistant à
recevoir une valeur de dégradation de caractéristique de fréquence pilote associée avec ladite au moins une station de base (2),
déterminer (8) une estimation virtuelle de la caractéristique de fréquence pilote par une comparaison de la valeur de dégradation et la caractéristique de fréquence pilote,

classer (9) ladite station de base (2) par rapport à d'autres stations de base en fonction de la valeur de l'estimation virtuelle calculée.

8. Procédé selon la revendication 7 comprenant la au moins une station de base (2) réalisant l'étape consistant à

transmettre un signal de communication vers le terminal d'utilisateur (1) ;

et **caractérisé en ce que** la station de base (2) réalise en outre l'étape consistant à :

transmettre (10) une valeur de dégradation de caractéristique de fréquence pilote pour une caractéristique de fréquence pilote mesurable et associée à la station de base (2), vers le terminal d'utilisateur (1).

*FIG. 1*

*FIG. 2*

*FIG. 3*